# FASCICULE DE BREVET EUROPEEN

(11) **EP 2 478 125 B1**
(45) Date de publication et mention de la délivrance du brevet: **01.02.2017**
(21) Numéro de dépôt: 10754352.2
(22) Date de dépôt: 20.09.2010
(51) Int. Cl.: C23C 10/28, C23C 10/48, C23C 10/58

(54) **PROCEDE POUR FORMER SUR LA SURFACE D'UNE PIECE METALLIQUE UN REVÊTEMENT PROTECTEUR CONTENANT DE L'ALUMINIUM**
VERFAHREN ZUM HERSTELLEN EINER AL-HALTIGEN BESCHICHTUNG AUF EINEN METALLISCHEN GEGENSTAND
METHOD OF MAKING AN ALUMINUM-CONTAINING COATING ON A METALLIC SURFACE.

(30) Priorité: 18.09.2009 FR 0956446
(43) Date de publication de la demande: 25.07.2012
(73) Titulaire: Safran Aircraft Engines, 75015 Paris (FR); ONERA (Office National d'Etudes et de Recherches Aérospatiales), 92320 Châtillon (FR)
(72) Inventeur: BROSSIER, Jérôme, F-77166 Evry-Cergy sur Yerres (FR); MENUEY, Justine, F-74000 Annecy (FR); PASQUET, Annie, F-91160 Longjumeau (FR); NAVEOS, Serge, F-92290 Chatenay-Malabry (FR); BACOS, Marie-Pierre, F-92160 Antony (FR); JOSSO, Pierre, F-22430 Erquy (FR)
(74) Mandataire: Gevers & Orès
(86) Numéro de dépôt international: PCT/EP2010/063827
(87) Numéro de publication internationale: WO 2011/033116

(56) Documents cités:
- EP-A2- 1 199 377
- EP-A2- 1 466 996
- WO-A1-2009/112581
- US-A- 3 951 642
- US-B1- 6 863 925

## Description

La présente invention concerne le dépôt d'un revêtement protecteur à base d'aluminium sur une pièce métallique. Elle vise plus particulièrement l'application d'un tel revêtement sur des pièces de turbomachine, notamment de moteur à turbine à gaz.

Un moteur à turbine à gaz, tel qu'utilisé pour la propulsion dans le domaine aéronautique comprend une entrée d'air atmosphérique qui communique avec un ou plusieurs compresseurs, dont une soufflante généralement, entraînés en rotation autour d'un même axe. Le flux primaire de cet air après avoir été comprimé alimente une chambre de combustion disposée annulairement autour de cet axe et est mélangé à un carburant pour fournir des gaz chauds en aval à une ou plusieurs turbines à travers lesquelles ceux-ci sont détendus, les rotors de turbine entraînant les rotors de compression. Les moteurs fonctionnent à une température des gaz moteurs en entrée de turbine que l'on cherche aussi élevée que possible car les performances lui sont liées. Dans ce but les matériaux sont sélectionnés pour résister à ces conditions de fonctionnement et les parois des pièces balayées par les gaz chauds, telles que les distributeurs ou les ailettes mobiles de turbine, sont pourvues de moyens de refroidissement. Par ailleurs, en raison de leur constitution métallique en superalliage à base de nickel ou de cobalt, il est nécessaire aussi de prémunir celles-ci de l'érosion et de la corrosion engendrées par les constituants des gaz moteurs à ces températures.

Un moyen connu pour assurer la protection de ces pièces est de déposer un revêtement à base d'aluminium sur les surfaces susceptibles d'agression par les gaz. L'aluminium se fixe au substrat par inter-diffusion métallique et forme une couche protectrice d'oxyde en surface. L'épaisseur du revêtement est de l'ordre de quelques dizaines de microns.

La présente invention se rapporte à la technique, en soi connue, de dépôt de l'aluminium en phase vapeur ou encore désignée aluminisation par dépôt en phase vapeur. Selon le procédé, on dispose les pièces à traiter dans une enceinte semi étanche dans laquelle l'atmosphère est constituée d'un mélange d'un gaz inerte ou réducteur, par exemple argon ou hydrogène, et d'un gaz actif comprenant un halogénure d'aluminium. A la température de réaction, entre 900°C et 1150°C, l'halogénure se décompose à la surface de la pièce en halogène gazeux et en aluminium qui diffuse dans le métal.

On produit l'halogénure en disposant dans l'enceinte avec les pièces à traiter, un cément donneur d'aluminium métallique ou d'alliage métallique d'aluminium avec un ou plusieurs des constituants métalliques, notamment le chrome, du matériau formant les pièces à protéger, en présence de granules d'un composé d'halogène, chlore ou fluor, qui forment l'activateur. On fait circuler le gaz inerte sur l'activateur à une température permettant la sublimation de l'halogène qui est entraîné sur le donneur et avec lequel il réagit pour produire l'halogénure métallique qui, à cette température, est sous forme vapeur.

L'activateur devant être gazeux à la température du revêtement et ne pas produire de polluants, on choisit généralement des produits tels que le chlorure d'ammonium, le fluorure d'ammonium ou le bifluorure d'ammonium. En présence d'hydrogène ou sous gaz neutre et à température élevée, ces molécules se décomposent en ammoniac et en halogène. La température de vaporisation dépend de la nature du sel halogéné choisi. Par exemple, elle est de 340°C pour le chlorure d'ammonium. L'activateur n'est utilisé que pour transporter en toute sécurité un acide halogéné dans le réacteur où le dépôt doit être effectué, c'est à dire la boîte semi-étanche. Le cation lié à cet halogène (ici l'ammonium) est par voie de conséquence inutile.

L'halogénure se décompose ensuite au contact du substrat métallique à revêtir permettant le dépôt de l'aluminium. Au cours de l'aluminisation il s'instaure un processus cyclique de dépôt d'aluminium se poursuivant continuellement jusqu'à ce que l'activité en aluminium de la surface du substrat devienne égale à celle imposée par le cément. L'halogène gazeux est reformé.

Le revêtement obtenu sert éventuellement de couche intermédiaire entre le substrat métallique et une barrière de protection thermique de ce substrat sur lequel on vient l'appliquer. Le revêtement permet d'améliorer aussi bien la tenue de la barrière thermique sur le substrat que la capacité de ce dernier à conserver des caractéristiques d'usage en cas de dégradation de la barrière thermique.

Par ailleurs, on connaît l'effet favorable d'un élément de terre rare comme le zirconium sur l'adhérence d'une couche d'oxyde sur un substrat métallique, que cette couche soit formée par exposition à l'air à haute température ou par dépôt d'une barrière thermique.

On a remplacé l'activateur, auparavant un Fluorure ou Chlorure d'ammonium par un activateur contenant l'élément de terre rare. Les études se sont orientées vers le zirconium comme étant un élément pouvant être déposé par le biais de l'utilisation d'un oxychlorure de zirconium.

Dans le brevet FR 2.853.329, on décrit un procédé d'aluminisation en phase vapeur modifié de manière à permettre la co-déposition de l'aluminium et du zirconium. L'halogénure d'ammonium du procédé APVS classique est remplacé au moins en partie par un composé de zirconium dont on souhaite voir la présence dans le dépôt à l'état de traces.

Parmi les sels de zirconium susceptibles de jouer le rôle d'un activateur, sont cités non limitativement, le chlorure de zirconium ZrCl₄, l'oxychlorure de zirconium ZrOCl₂ et le fluozirconate d'ammonium (NH₄)2ZrF₆. Tous ces sels sont gazeux au-delà de 250°C. L'oxychlorure de zirconium est l'activateur préféré.

Le principe du dépôt reste identique à celui du procédé APVS. On dispose le cément à base d'aluminium ou d'alliage d'aluminium et notamment de chrome, sous forme de grains de diamètre compris entre 1 mm et quelques cm dans une boîte semi-étanche appropriée. Les pièces à revêtir sont disposées de façon à être mises en contact avec l'halogénure d'aluminium gazeux formé. L'activateur halogénure d'ammonium est remplacé en tout ou en partie par de l'oxychlorure de zirconium. On chauffe l'enceinte dans laquelle la boîte est placée jusqu'à la température du traitement APVS. Au delà d'une certaine température, l'activateur s'évapore et forme une vapeur riche en chlorure de zirconium.

Ce dernier se décompose à la surface du substrat en superalliage de nickel pour former du zirconium à l'état métallique d'une part et un acide halogéné disponible pour former dans le cément donneur un halogénure d'aluminium d'autre part. Le zirconium déposé à la surface du substrat diffuse ensuite dans le revêtement de bêta -NiAl en cours de formation pour donner un intermétallique enrichi entre 500 et 1000 ppm (parties par million) de zirconium.

Les analyses thermochimiques suggèrent que le processus de dépôt de NiAI(Zr) s'effectue en deux étapes, le dépôt de zirconium qui a lieu à basse température (400-600°C) suivi de l'Aluminisation à haute température (1100°C). Seul AlCl parmi tous les Chlorures d'Aluminium est directement responsable du transport et de la déposition de l'Aluminium. ZrCl₄ est la principale espèce gazeuse de Chlorure de zirconium présente, les autres espèces telles que ZrCl₃, ZrCl₂ ou ZrCl sont également contenues dans le réacteur mais avec des pressions de vapeur très inférieures. Jusqu'à 620°C la pression de vapeur de ZrCl₄ est supérieure à AlCl. Au-delà de 620°C, l'ordre de pression est inversé. A la température d'aluminisation de 1100°C, la pression de vapeur de ZrCl₄ n'est pas suffisamment élevée pour permettre le dépôt du zirconium métal.

La formation de ZrCl₄ grâce à ZrOCl₂, 8H₂O est spontanée quelle que soit l'atmosphère et a lieu à partir de 350°C :

ZrOCl₂ + H₂O → Zr₂O₃Cl=+ 2 HCl

Zr₂O₃Cl₂ → ½ ZrCl₄ + 3/2 ZrO₂

La première réaction libère du HCl qui réagit avec l'Aluminium du cément pour former AlCl :

Al + HCl → AlCl + ½ H₂

La réaction responsable du dépôt de zirconium à la surface de l'alliage :

ZrCl₄ + 2 AlCl → 2 AlCl₃ + Zr

Cette réaction survient à relativement basse température quand les pressions de vapeur de ZrCl₄ et d'AlCl sont élevées. Lorsqu'on dépasse 620°C, la pression de vapeur de ZrCl₄ devient trop faible et seul l'Aluminium est capable de se déposer à la surface du substrat selon la réaction :

3 AlCl + 2 Ni → 2 NiAl + AlCl₃

Le dépôt NiAIZr est alors construit, en une seule étape.

Outre le zirconium on cite aussi l'hafnium qui joue un rôle semblable à celui du zirconium.

Le dépôt NiAIZr ainsi constitué présente cependant quelques problèmes notamment en termes d'homogénéité des dépôts dans l'enceinte de la boite : en effet, l'élément à déposer, le zirconium est intégré à l'activateur.

De ce fait il peut y avoir des différences de teneur en zirconium en fonction du nombre de pièces à revêtir.

Dans le brevet US 3 951 642, on décrit un procédé d'aluminisation dans lequel on fait réagir un mélange de poudres comprenant un poudre d'un alliage d'aluminium et un poudre contenant hafnium.

L'invention vise un procédé amélioré d'aluminisation par dépôt en phase vapeur de ce type avec codéposition de zirconium, permettant notamment de piloter la concentration en Zr dans le dépôt.

Le procédé de l'invention pour former sur la surface d'une pièce métallique un revêtement protecteur contenant de l'aluminium, dans lequel on met en contact ladite pièce et un cément en un alliage comprenant de l'aluminium à une température de traitement, dans une enceinte avec une atmosphère contenant un gaz actif qui réagit avec le cément pour former un halogénure d'aluminium gazeux, lequel se décompose au contact de la pièce en y déposant de l'aluminium métallique, est caractérisé par le fait que l'alliage comprenant de l'aluminium du cément comprend au moins un élément réactif, qui est le zirconium et/ou l'hafnium, le gaz actif réagissant avec le cément pour former également un halogénure dudit élément réactif lequel se décompose au contact de la pièce en y déposant ledit élément réactif en même temps que l'aluminium.

L'avantage de ce procédé est qu'en apportant l'élément réactif par le cément et non par l'activateur, on améliore la reproductibilité de celui-ci.

Le cément est un réservoir d'aluminium et d'élément réactif, zirconium et/ou d'hafnium, qui au fur et à mesure de l'attaque par l'acide, libère les éléments volatils métalliques, tout en conservant une réserve suffisante de ces éléments réactifs contrairement à l'activateur qui s'épuise.

Plus précisément, le gaz actif comprend un halogène ou un halogénure d'ammonium : NH₄Cl, NH₄F et NH₄F, HF.

L'atmosphère est formée, outre le gaz actif, d'un gaz inerte ou réducteur tel que l'argon ou l'hydrogène et la température de traitement est comprise entre 950 et 1200°C et de préférence d'environ 1080°C.

Conformément à une mise en oeuvre du procédé, on chauffe progressivement, ensemble la pièce et le cément avec le gaz dans une enceinte depuis la température ambiante jusqu'à la température de traitement avec un palier à 500°C +- 100°C.

Plus particulièrement, la durée du palier de chauffage est 5 à 30 minutes. On chauffe progressivement à une vitesse de montée en température comprise entre 4 et 20°C par minute.

L'avantage du procédé de l'invention est de maîtriser la quantité d'élément réactif, tel que le zirconium, déposé. Le palier permet d'une part une bonne homogénéisation de l'atmosphère en élément réactif avec des réactions chimiques complètes, d'autre part la montée rapide en température après la décomposition permet le dépôt simultanément d'aluminium et d'élément réactif.

La pièce contient au moins du nickel qui se combine avec l'aluminium pour former dans le revêtement un composé intermétallique NiAl dans lequel l'aluminium est partiellement substitué par l'élément réactif le zirconium et/ou l'hafnium. Plus particulièrement la pièce est en superalliage à base de nickel.

Avantageusement le cément est formé d'un alliage d'Aluminium, de Chrome et d'au moins l'un des deux éléments réactifs, notamment zirconium et hafnium.

Plus particulièrement t les céments ternaires ou quaternaires sont sous forme de cailloux et se composent de 60-70 % de Chrome, de 20-30% de d'Aluminium, de 3-15% de zirconium et/ou 3-15% de hafnium, le total étant à 100%.

Le procédé est particulièrement avantageux dans le cas où l'on forme une sous couche aluminisée d'une barrière thermique telle que celle formée selon la technique présentée dans le brevet US 5.514.482.

Le zirconium dans cette sous couche permet de stabiliser la migration de l'aluminium en agissant comme modérateur à la diffusion de l'aluminium. En effet celui-ci a tendance à migrer de la sous couche dans le substrat avec pour conséquence la fragilisation de la sous couche due aux manques de matière dans la sous couche qui en résulte. Par ailleurs l'aluminium dans la barrière thermique forme de l'alumine qui fragilise l'adhérence de la barrière thermique à la sous couche.

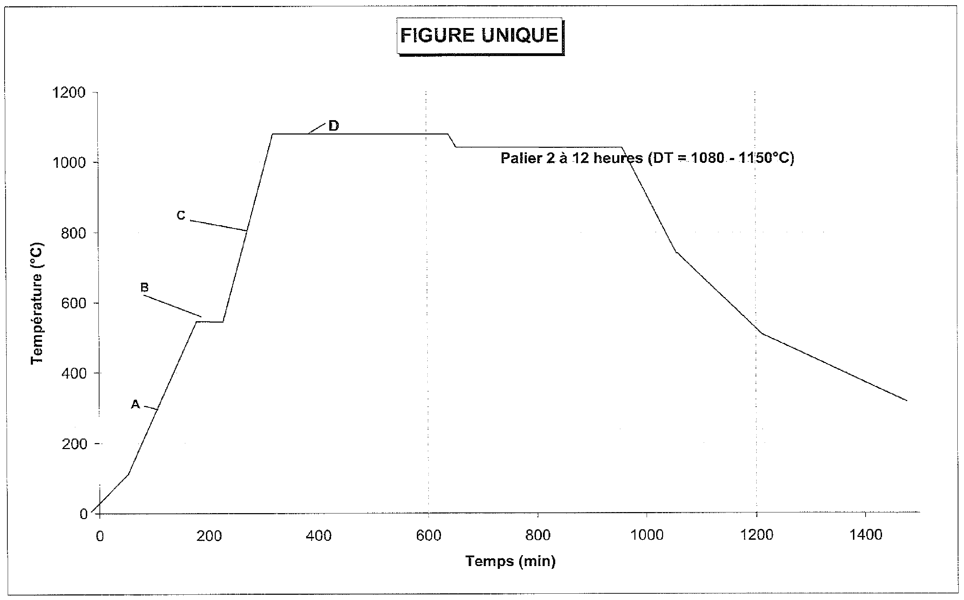

D'autres caractéristiques et avantages ressortiront de la description qui suit en se référant à la figure unique. Celle-ci est un graphique représentant l'évolution en température d'un procédé selon l'invention.

Comme cela a été rapporté plus haut, le procédé s'applique avantageusement au traitement des aubes mobiles de turbomachine, de turbine notamment ou aux ailettes de distributeur de turbomachine.

On dispose, avec les pièces à traiter, un cément donneur d'aluminium constitué d'un alliage chrome-aluminium dans une boîte, elle-même placée dans une enceinte fermée de manière à pouvoir travailler sous atmosphère contrôlée.

Conformément à l'invention, les céments sont ternaires ou quaternaires. Ils sont sous forme de cailloux et se composent selon un exemple de mise en oeuvre de 65% de Chrome, de 30% de d'Aluminium et de 5% de zirconium ou de hafnium. Pour le cément quaternaire, celui-ci est composé, par exemple, de 64% de Chrome, 30% d'Aluminium, 3% de zirconium et 3% de hafnium. Ces céments étant coulés, les éléments réactifs (Zr, Hf) sont répartis de manière homogène.

On place également l'activateur, qui est solide à température ambiante, en proportion par rapport au cément de quelques pour cent.

L'enceinte est ensuite purgée avant introduction du gaz constituant l'atmosphère initiale, argon ou l'hydrogène.

L'activateur (NH₄F ou NH₄Cl) se décompose en formant de l'acide chlorhydrique ou fluorhydrique qui va ensuite attaquer le cément. Cette réaction libère des composés volatils contenant les éléments tels que l'Aluminium, le zirconium ou l'hafnium.

On donne ci-après des exemples de réactions probables avec le fluorure:

| | NH₄F→NH₃F+HF | |
|---|---|---|
| Formation des composés volatils | 6HF+2Al → 2 AlF₃ + 3H₂ | 4HF + Zr → ZrF₄ + 2H2 |
| | AlF₃ + 2Al → 3 AlF | ZrF₄ + 3Zr → 74 ZrF |
| Dépôt sur le substrat | 3AlF + 2 Ni → 2 NiAl + AlF₃ | 4 ZrF + 3 Ni→ 3 NiZr + ZrF₄ Ou ZrF₄ + 2 AlF→ Zr + 2 AlF₃ |

Les dépôts NiAIZr, NiAlHf ou NiAIZrHf sont alors construits en une seule étape. Les quantités d'éléments réactifs (Zr, Hf) visées sont de 500 à 1000 ppm.

Un cycle de traitement avantageux comprend, comme on peut le voir sur le graphique annexé, une première étape de chauffage A. La montée en température est progressive. La vitesse est comprise entre 4 et 20°C par minute. Lorsque la température atteint 500°C environ. On maintient, étape B celle-ci constante pendant une durée, comprise, entre 5 et 30 minutes de manière à assurer les teneurs en éléments réactifs visés ci-dessus.

On reprend la montée en température, étape C. Lorsque l'enceinte a atteint la température de traitement d'aluminisation, comprise entre 1080°C et 1180°C, on maintient, étape D, celle-ci pendant 4 à 16 heures de façon à permettre le dépôt de l'aluminium et sa diffusion dans la pièce. L'élément réactif, ici le zirconium, est concentré dans la première couche.

On a procédé à des essais pour montrer l'intérêt de la solution. Trois céments ont été préparés sur une base de chrome avec 30% d'aluminium et de 3 à 10% d'élément réactif, Zr, Hf et Zr-Hf, le complément à 100% en masse étant donc le chrome. On a mesuré la durée de vie moyenne DDV d'éprouvettes réalisées par le procédé et revêtues de céramique, en procédant à des cycles de chauffage à haute température ; le nombre de cycles déterminé était celui où apparaissait un écaillage de 20% en surface de la céramique. Pour les essais on a mesuré le pic en ppm de la quantité de réactif déposé sur des témoins de fournée, avec la méthode gdms.

Le tableau ci-dessous résume les essais et les mesures.

| Apport élément réactif via les céments | DDV moyenne | Essai | Pic en ppm |
|---|---|---|---|
| | | 1 | Zr 200 |
| CrAlZr | 720 cycles | 2 | Zr 200 |
| | | 3 | Zr 250 |
| | | 4 | Zr 500 |
| | | 1 | Hf 600 |
| CrAlHf | 750 cycles | 2 | Hf 850 |
| | | 3 | Hf 450 |
| | | 4 | Hf 400 |
| | | 1 | Zr 350 Hf 450 |
| CrAlZrHf | | 2 | Zr 350 Hf 400 |
| | | 3 | Zr 100 Hf 200 |
| | | 4 | Zr 250 Hf 250 |

On constate une faible dispersion du dopage de 200 à 850 ppm en dépôt simple conduisant à une augmentation de la durée de vie, par rapport à un procédé de l'art antérieur, notamment où les éléments réactifs sont apportés par l'activateur.

On constate aussi une dispersion du dopage très réduite, de 300 à 800 ppm en co-dépôt, avec une amélioration de la durée de vie.

## Revendications

1. Procédé pour former sur la surface d'une pièce métallique un revêtement protecteur contenant de l'aluminium, dans lequel on met en contact ladite pièce et un cément en un alliage comprenant de l'aluminium, à une température de traitement, dans une enceinte avec une atmosphère contenant un gaz actif qui réagit avec le cément pour former un halogénure d'aluminium gazeux, lequel se décompose au contact de la pièce en y déposant de l'aluminium métallique, **caractérisé par le fait que** l'alliage comprenant de l'aluminium du cément comprend au moins un élément réactif qui est le zirconium et/ou le hafnium, le gaz actif réagissant avec le cément pour former également un halogénure de l'élément réactif lequel se décompose au contact de la pièce en y déposant ledit élément réactif en même temps que l'aluminium.

2. Procédé selon la revendication précédente selon lequel le gaz actif comprend un halogène ou un halogénure d'ammonium, tel que NH₄Cl, NH₄F, NH₄F, HF.

3. Procédé selon l'une des revendications 1 et 2 selon lequel l'atmosphère outre le gaz actif comprend également un gaz inerte ou réducteur, tel que l'argon ou l'hydrogène.

4. Procédé selon l'une des revendications précédentes selon lequel on chauffe progressivement, ensemble la pièce et le cément avec le gaz dans une enceinte depuis la température ambiante jusqu'à la température de traitement avec un palier à 500°C +- 100°C.

5. Procédé selon la revendication 4, selon lequel la durée du palier de chauffage est de 5 à 30 minutes.

6. Procédé selon l'une des revendications 4 et 5, selon lequel on chauffe progressivement à une vitesse de montée en température comprise entre 4 et 20°C par minute.

7. Procédé, selon l'une des revendications précédentes, selon lequel la pièce contient au moins du nickel qui se combine avec l'aluminium pour former dans le revêtement un composé intermétallique NiAl dans lequel l'aluminium est partiellement substitué par le zirconium et/ou l'hafnium.

8. Procédé, selon l'une des revendications précédentes, selon lequel la pièce est en superalliage à base de nickel ou de cobalt.

9. Procédé, selon l'une des revendications précédentes, selon lequel le cément est formé d'un alliage d'aluminium, de chrome et d'au moins l'un des deux éléments zirconium et hafnium.

10. Procédé, selon la revendication précédente, selon lequel les nouveaux céments ternaires sont sous forme de cailloux et se composent de 60-70 % de chrome, de 20-30% d'aluminium, de 3-15% de zirconium et/ou 3-15% de hafnium.

11. Procédé selon l'une des revendications précédentes, dans lequel ladite température de traitement est comprise entre 950 et 1200°C et de préférence d'environ 1080°C.

## Patentansprüche

1. Verfahren zum Bilden einer Aluminium enthaltenden Schutzschicht auf der Oberfläche eines Metallteils, bei dem das Teil und ein Zusatzmittel aus einer Legierung umfassend Aluminium bei einer Behandlungstemperatur in einem Raum mit einer Atmosphäre in Kontakt kommen, die ein aktives Gas enthält, das mit dem Zusatzmittel zum Bilden eines gasförmigen Aluminiumhalogenids reagiert, das sich bei Kontakt mit dem Teil unter Ablagern des metallischen Aluminiums zersetzt, **dadurch gekennzeichnet, dass** die Aluminium umfassende Legierung des Zusatzmittels wenigstens ein reaktives Element umfasst, das Zirconium und/oder Hafnium ist, wobei das aktive Gas mit dem Zusatzmittel reagiert, um ebenfalls ein Halogenid des reaktiven Elements zu bilden, das sich bei Kontakt mit dem Teil unter Ablagern des reaktiven Elements gleichzeitig mit dem Aluminium zersetzt.

2. Verfahren nach dem vorhergehenden Anspruch, wobei das aktive Gas ein Halogen oder ein Ammoniumhalogenid wie NH₄Cl, NH₄F, NH₄F, HF umfasst.

3. Verfahren nach einem der Ansprüche 1 und 2, wobei die Atmosphäre zusätzlich zum aktiven Gas ebenfalls ein inertes oder reduzierendes Gas wie Argon oder Wasserstoff umfasst.

4. Verfahren nach einem der vorhergehenden Ansprüche, wobei das Teil und das Zusatzmittel zusammen mit dem Gas in einem Raum von der Umgebungstemperatur bis zur Behandlungstemperatur mit einer Stufe von 500 °C +/- 100 °C erwärmt werden.

5. Verfahren nach Anspruch 4, wobei die Dauer der Erwärmungsstufe 5 bis 30 Minuten beträgt.

6. Verfahren nach einem der Ansprüche 4 und 5, wobei schrittweise mit einer Geschwindigkeit des Temperaturanstiegs von zwischen 4 und 20 °C pro Minute erwärmt wird.

7. Verfahren nach einem der vorhergehenden Ansprüche, wobei das Teil wenigstens Nickel enthält, das sich mit dem Aluminium verbindet, um in der Beschichtung eine intermetallische Verbindung NiAl zu bilden, in der das Aluminium teilweise durch Zirconium und/oder Hafnium ersetzt ist.

8. Verfahren nach einem der vorhergehenden Ansprüche, wobei das Teil eine Superlegierung auf der Basis von Nickel oder Kobalt ist.

9. Verfahren nach einem der vorhergehenden Ansprüche, wobei das Einsatzmittel aus einer Legierung aus Aluminium, Chrom und wenigstens einem der beiden Elemente Zirconium und Hafnium gebildet wird.

10. Verfahren nach dem vorhergehenden Anspruch, wobei die neuen ternären Einsatzmittel in Form von Kies vorliegen und aus 60 - 70 % Chrom, 20 - 30 % Aluminium, 3 - 15 % Zirconium und/oder 3 - 15 % Hafnium bestehen.

11. Verfahren nach einem der vorhergehenden Ansprüche, wobei die Behandlungstemperatur zwischen 950 und 1200 °C liegt und vorzugsweise 1080 °C beträgt.

## Claims

1. Method for forming on the surface of a metal part a proactive coating containing aluminium, in which said part and a cement made from an alloy comprising aluminium are put in contact, at a treatment temperature, in a chamber with an atmosphere containing an active gas that reacts with the cement in order to form a gaseous aluminium halide, which decomposes in contact with the part, depositing metallic aluminium thereon, **characterised by** the fact that the alloy comprising cement aluminium comprises at least one reactive element that is zirconium and/or hafnium, the active gas reacting with the cement in order to form also a halide of the reactive element that decomposes in contact with the part, depositing said reactive element thereon at the same time as the aluminium.

2. Method according to the preceding claim, according to which the active gas comprises a halogen or an ammonium halide, such as NH₄Cl, NH₄F, NH₄F or HF.

3. Method according to one of claims 1 and 2, according to which the atmosphere apart from the active gas also comprises an inert or reducing gas such as argon or hydrogen.

4. Method according to one of the preceding claims, according to which the part and the cement are gradually heated together with the gas in a chamber from ambient temperature to the treatment temperature with a level stage at 500°C ± 100°C.

5. Method according to claim 4, according to which the duration of the level heating stage is from 5 to 30 minutes.

6. Method according to one of claims 4 and 5, according to which heating is carried out gradually at a temperature-rise rate of between 4° and 20°C per minute.

7. Method according to one of the preceding claims, according to which the part contains at least nickel that combines with aluminium in order to form in the coating an NiAl intermetallic compound in which the aluminium is partially replaced by zirconium and/or hafnium.

8. Method according to one of the preceding claims, according to which the part is made from a superalloy based on nickel or cobalt.

9. Method according to one of the preceding claims, according to which the cement is formed by an alloy of aluminium, chromium and at least one of the two elements zirconium and hafnium.

10. Method according to the preceding claim, according to which the novel ternary cements are in the form of pebbles and are composed of 60-70% chromium, 2030% aluminium, 3-15% zirconium and/or 3-15% hafnium.

11. Method according to one of the preceding claims, in which the treatment temperature is between 950° and 1200°C and preferably approximately 1080°C.
